# EUROPÄISCHE PATENTSCHRIFT

(11) **EP 4 093 654 B1**
(45) Veröffentlichungstag und Bekanntmachung des Hinweises auf die Patenterteilung: **09.07.2025**
(21) Anmeldenummer: 21708639.6
(22) Anmeldetag: 26.02.2021
(51) Int. Cl.: B62D 55/08, B62D 21/18

(54) **UNTERWAGEN FÜR EINE ARBEITSMASCHINE**
UNDERCARRIAGE FOR A WORK MACHINE
CHÂSSIS DE ROULEMENT POUR ENGIN DE CHANTIER

(30) Priorität: 02.03.2020 DE 202020101133 U
(43) Veröffentlichungstag der Anmeldung: 30.11.2022
(60) Teilanmeldung: 23159934.1
(73) Patentinhaber: Liebherr-Werk Nenzing GmbH, 6710 Nenzing (AT)
(72) Erfinder: MIETSCHNIG, Walter, 6708 Brand (AT); TORGHELE, Richard, 6781 Bartholomäberg (AT); BARGEHR, Robert, 6706 Bürs (AT)
(74) Vertreter: Laufhütte, Dieter
(86) Internationale Anmeldenummer: PCT/EP2021/054864
(87) Internationale Veröffentlichungsnummer: WO 2021/175718

(56) Entgegenhaltungen:
- EP-A1- 0 538 721
- EP-A1- 0 803 428
- DE-A1- 10 317 309
- DE-A1- 102011 102 110
- DE-A1- 2 047 480
- DE-B3- 102014 006 108
- US-A1- 2004 026 153

## Beschreibung

Die vorliegende Erfindung betrifft einen Unterwagen für eine Arbeitsmaschine, insbesondere für ein Raupenfahrzeug, wie etwa einen Raupenkran.

Raupenfahrzeuge stehen während der Verrichtung ihrer Arbeit in der Regel auf ihren eigenen Raupen. Dies bringt bspw. bei Raupenkranen den Vorteil mit sich, dass sie keine Abstützung benötigen und trotz angehobener Last verfahrbar bleiben. Die Länge der Raupen und der gegenseitige Abstand der Raupenschiffe, also der mit einer Raupenkette umspannten Raupenträger, sind wesentliche Größen für die Bestimmung der Krankippkanten während des Kraneinsatzes.

Zwar nimmt die Kippstabilität mit einer Vergrößerung des Abstands zwischen den Raupenschiffen zu, allerdings führt die Vergrößerung gleichzeitig zu einer nachteiligen Beeinträchtigung der Verfahrbreite des Raupenkrans. Eine große Verfahrbreite ist zum einen störend in Bezug auf die benötigte Durchfahrtsbreite zwischen Störkanten und zum anderen muss zwangsläufig für eine breitere Spur gesorgt werden, um das mit Raupen versehene Fahrzeug ohne Gefahr auf einer Baustelle verfahren zu können. Insbesondere muss die Tragfähigkeit des Untergrunds gewährleistet werden, um die von den Raupen verursachte Bodenpressung aufzunehmen. Regelmäßig ist hierzu eine Verdichtung des Untergrunds notwendig. Die unterschiedlichen Zielsetzungen Kranstabilität und notwendige Verfahrbreite müssen daher oftmals gegeneinander abgewägt werden, um eine geeignete Entscheidung zu treffen, welche Konfiguration sich für den vorliegenden Einsatz besser eignet.

Daher ist es vorteilhaft eine variable Spurbreite zu ermöglichen, die je nach spezifischer Einsatzumgebung gewählt wird. Diese Variabilität wird im Stand der Technik jedoch mit Nachteilen erkauft, da zum Ändern der Spurbreite unterschiedliche Unterwagen vorgehalten werden oder, wie z.B. in der EP 0 590 123 B1, die Raupenschiffe über am Rahmenmittelteil des Raupenfahrwerks angebrachte Parallelogrammlenker verstellt werden.

Das Vorhalten mehrere unterschiedlicher Unterwagen für verschiedene Spurbreiten stellt einen herausfordernden logistischen Aufwand dar und erfordert zudem auch immer einen tiefgreifenden Umbau beim Verstellen der Spur.

Die aus dem Stand der Technik weiter bekannten Mechanismen zum Verstellen der Spur, wie bspw. das Vorsehen von Parallelogrammlenkern am Rahmenmittelteil des Unterwagens, führen zu einer beträchtlichen Gewichtszunahme des Rahmenmittelteils, so dass bei einer zum Transport üblicherweise vorzusehenden Demontage der Raupenschiffe, das Rahmenmittelteil ein den Transport erschwerendes sehr hohes Gewicht besitzt.

Die DE 20 47 480 A1, die EP 0 538 721 A1, die DE 10 2014 006108 B3 oder die EP 0 803 428 A1 zeigen jeweils einen Unterwagen für eine Arbeitsmaschine, der sämtliche Merkmale aus dem Oberbegriff des Anspruchs 1 aufweist.

Es ist daher das Ziel der vorliegenden Erfindung, die oben aufgeführten Nachteile zu überwinden und dennoch eine variable Spurbreite mit möglichst wenig Arbeitsaufwand umsetzen zu können.

Dies gelingt mit einer Unterwagen für eine Arbeitsmaschine, die sämtliche Merkmale des Anspruchs 1 aufweist.

Demnach ist vorgesehen, dass der Unterwagen für eine Arbeitsmaschine, insbesondere ein Raupenfahrzeug wie ein Raupenkran, ein Rahmenmittelteil zum Aufnehmen eines Oberwagens der Arbeitsmaschine, mindestens ein längliches Holmelement, das an dem Rahmenmittelteil anbaubar ist, und mindestens einen Raupenträger zum Tragen einer Raupenkette umfasst, wobei der Unterwagen dadurch gekennzeichnet ist, dass der Raupenträger eine Ausnehmung zum Durchführen des Holmelements aufweist vorzugsweise wobei das Holmelement durch die Ausnehmung des Raupenträgers durchgeführt ist, und das Holmelement entlang seiner Längsrichtung mehrere voneinander beabstandete Verriegelungselemente zum Fixieren des Raupenträgers an unterschiedlichen Längspositionen des Holmelements aufweist. Nach der Erfindung ist vorgesehen, dass das Holmelement zum Ausrichten des Raupenträgers an einer bevorzugten Fixierungsposition eine vom Holmelement nach außen abstehende Positionierungsnocke umfasst.

Zum einen wird durch das an dem Rahmenmittelteil anbaubare Holmelement ermöglicht, dass bei einer Demontage der Raupenschiffe das Holmelement vom Rahmenmittelteil abgenommen werden kann, so dass das Gewicht und die Abmessungen des Rahmenmittelteils für einen Transport möglichst gering sind. Auf der anderen Seite ergibt das durch die Ausnehmung des Raupenträgers durchgeführte Holmelement eine Variabilität in Bezug auf die gewünschte Spurbreite des Unterwagens, da das Holmelement entlang seiner Längsrichtung mehrere voneinander beabstandete Verriegelungselemente zum Fixieren des Raupenträgers an unterschiedlichen Längspositionen des Holmelements aufweist.

Dabei kann vorgesehen sein, dass Raupenträger und Holmelement eine gemeinsame Baugruppe darstellen, die vorzugsweise nur durch tiefgreifende Umbaumaßnahmen voneinander getrennt werden können. Unter normalen Umständen kann es aber nicht zu einem Trennen von Holmelement und Raupenträger kommen, da das Holmelement zwar verschiebbar in der Ausnehmung des Raupenträgers angeordnet ist, jedoch nicht aus der Ausnehmung herausziehbar ist.

Vorteilhaft an der vorliegenden Erfindung ist, dass nun sehr kurzfristig, also noch unmittelbar vor einem Anbauen der Raupenschiffe an dem Rahmenmittelteil, entschieden werden kann, welche Spurbreite der Unterwagen erhalten soll. Ein Vorhalten eines anders ausgestalteten Rahmenmittelteils ist nicht mehr erforderlich, da nach der Erfindung die Variabilität der Spur unabhängig von einer Ausgestaltung des Mittelteils erfolgt.

Nach der Erfindung kann vorgesehen sein, dass die mehreren voneinander beabstandeten Verriegelungselemente Bolzenlöcher zur Aufnahme eines Bolzens sind.

So kann mit Hilfe von mindestens einem Bolzen festgelegt werden, wie tief das Holmelement in Ausnehmung des Raupenträgers eindringt oder wie weit es durch die Ausnehmung hindurchgeschoben ist. Abhängig davon verändert sich der Abstand des Raupenträgers zum Rahmenmittelteil. Um die verschiedenen an der Längsachse des Holmelements angeordneten Fixierungspunkte, bzw. Verriegelungselement des Raupenträgers umzusetzen, können bspw. in Längsrichtung des Holmelements voneinander beabstandete Bolzlöcher vorgesehen sein. Ist an dem Raupenträger ebenfalls ein korrespondierendes Bolzloch vorhanden, kann bei einer fluchtenden Ausrichtung des holmseitigen Bolzenlochs mit dem trägerseitigen Bolzenloch durch Einstecken eines Bolzens eine Bolzenverbindung geschaffen werden, die den Raupenträger an dem Holmelement fixiert. Dabei ist klar, dass mehrere Bolzlöcher, bzw. Verriegelungselemente an einer übereinstimmenden Längsposition des Holmelements vorgesehen sein können, um eine verlässlichere Fixierung zu erhalten.

Wie bereits kurz erläutert, kann demnach vorgesehen sein, dass der Raupenträger ein Verriegelungselement zum Fixieren des in den Raupenträger eingeführten oder durch ihn hindurchgeführten Holmelements aufweist, wobei vorzugsweise das Verriegelungselement ein Bolzenloch zur Aufnahme eines Bolzens ist.

So kann vorgesehen sein, dass der Raupenträger an dem Holmelement mittels einer Bolzverbindung fixiert ist, vorzugsweise durch die fluchtende Ausrichtung einander korrespondierender Bolzlöcher an dem Holmelement und dem Raupenträger und dem Einstecken eines Bolzens in die einander fluchtenden Bolzlöcher.

Nach einer vorteilhaften Modifikation der Erfindung kann vorgesehen sein, dass das Holmelement zum Ausrichten des Raupenträgers an einer bevorzugten Fixierungsposition eine vom Holmelement nach außen abstehende Positionierungsnocke umfasst, wobei vorzugsweise die Positionierungsnocke senkrecht zur Längsrichtung des Holmelements absteht.

Diese Positionierungsnocke kann dabei mit einer Stirnseite der Ausnehmung zusammenwirken, bspw. an diese Anschlagen, so dass dadurch kenntlich gemacht wird, dass eine der mehreren Fixierungspositionen des Raupenträgers an dem Holmelement erreicht worden ist.

Weiter kann vorgesehen sein, dass der Raupenträger zum Ausrichten des Raupenträgers an einer bevorzugten Fixierungsposition des Holmelements im Umfangsbereich der Ausnehmung zum Durchführen oder Einführen des Holmelements eine sich parallel zur Ein- oder Durchführungsrichtung des Holmelements erstreckende klauenartige Vertiefung zum Aufnehmen einer vom Holmelement abstehenden Positionierungsnocke umfasst, wobei vorzugsweise an beiden Seiten der Ausnehmung im Umfangsbereich mindestens eine klauenartige Vertiefung vorgesehen ist.

Wirkt die Positionierungsnocke des Holmelements nun mit einer an der stirnseitigen Umfangskante der Ausnehmung vorgesehenen Vertiefung zusammen, kann dies vorteilhafterweise zu einer korrekten Ausrichtung des Holmelements in der Ausnehmung führen und bspw. zu einer korrekten Zentrierung des Holmelements in der Ausnehmung beitragen. Die an der Stirnseite vorgesehene Vertiefung kann sich dabei parallel zur Längsrichtung des in der Aufnahme eingesteckten Holmelements erstrecken. Anders ausgedrückt kann die Vertiefung in der Stirnkante der Ausnehmung senkrecht zur Längsrichtung des Raupenträgers verlaufen, so dass die klauenartige Vertiefung in Zusammenwirkung mit der Positionierungsnocke einen ausrichtenden Effekt, bspw. eine Zentrierung des Holmelements in der Ausnehmung bewirken kann.

Dabei kann vorgesehen sein, dass an jeder der beiden Stirnseiten der Ausnehmung mindestens eine Vertiefung, vorzugsweise an jeder der Stirnseiten zwei Vertiefungen vorgesehen sind, die mit entsprechenden Positionierungsnocken der Holmelemente zusammenwirken. Sind an einer der beiden Stirnseiten zwei oder mehr klauenartige Vertiefungen vorgesehen, so können diesen an gegenüberliegenden Seiten (oben und unten bzw. links und rechts) der das Holmelement umgebenden Stirnseite angeordnet sein.

Nach der Erfindung kann ferner vorgesehen sein, dass das Rahmenmittelteil zum Anbauen des Holmelements eine klauenartige, etwa halbkreisförmige Fangfläche zum Aufnehmen eines Querbolzens des Holmelements aufweist und vorzugsweise ein zugehöriges Bolzenloch aufweist, um eine starre Verbindung von Holmelement und Rahmenmittelteil über eine Bolzenverbindung mit einem fluchtenden holmseitigen Bolzenloch zu erzeugen.

Demnach kann an einem Längsendenbereich des Holmelements ein zur Längsrichtung des Holmelements quer angeordneter Querbolzen vorhanden sein, der dazu ausgelegt ist, mit einer Fangfläche des Rahmenmittelteils zusammenzuwirken.

Mit Hilfe der Fangfläche kann das anzubauende Holmelement auf dem Rahmenmittelteil zunächst über eine Relativbewegung aufgesetzt und vorpositioniert werden, ohne dass hierfür eine exakte Ausrichtung des Holmelements nötig wäre. So ergibt sich die vorteilhafte Möglichkeit, zunächst das Holmelement mit einem vom Holmelement abstehenden Querbolzen auf dem Rahmenmittelteil aufzusetzen, und dieses erst daraufhin in eine Montageposition so auszurichten, dass die Verbindungselemente, typischerweise in Form von Bolzen gesetzt und die endgültige Verbindung des Holmelements mit dem Rahmenmittelteil hergestellt werden kann.

Dies führt zu einem erheblich schnelleren und vereinfachten Anbau des Holmelements an dem Rahmenmittelteil. Insbesondere muss so lediglich darauf geachtet werden, dass der Querbolzen des Holmelements und die Fangfläche des Rahmenmittelteils so zueinander positioniert werden, dass sie ineinandergreifen. Ist dies der Fall, ist lediglich noch eine Schwenkbewegung der beiden Bauteile zueinander möglich.

So kann nach der Erfindung vorgesehen sein, dass eine starre Verbindung von Holmelement und Rahmenmittelteil nach Einlegen des Querbolzens in die Fangfläche und einer entsprechenden Schwenkbewegung des in die Fangfläche gelegten Holmelements erfolgt, die zum fluchtenden Ausrichten der holmseitig und rahmenseitig vorhandenen Bolzenlöcher dient. Ist eine fluchtende Anordnung der beiden Bolzenlöcher erreicht, so kann durch das automatische oder manuelle Einschieben eines Bolzens die Verbindung von Holmelement und Rahmenmittelteil fixiert werden.

Nach einer vorteilhaften Modifikation der Erfindung ist das Holmelement in die Durchführung des Raupenträgers eingeschoben und der Abstand des Raupenträgers zum Rahmenmittelteil, also die Spurweite der Arbeitsmaschine, aufgrund der mehreren in Längsrichtung voneinander beabstandeten Verriegelungselemente des Holmelements variierbar, insbesondere stufenartig variierbar.

Vorteilhafterweise ist nach der Erfindung vorgesehen, dass das Holmelement derart in den Raupenträger eingeschoben ist, das ein Herausgleiten des Holmelements auch bei nicht gesteckten Bolzen nicht möglich ist. So wird also eine gemeinsame an den Rahmenmittelteil anbaubare Baugruppe aus Raupenträger und Holmelement geschaffen, die dennoch eine variable Spurbreite bewerkstelligen kann.

Da ein Herausgleiten des Holmelements aus der Ausnehmung des Raupenträgers nicht möglich ist, kann der Raupenträger bspw. mit einem Hilfskran angehoben werden und an dem Rahmenmittelteil angebaut werden. Zusätzliche Vorkehrungen gegen ein Herausrutschen des Holmelements aus der Ausnehmung sind dabei nicht zu treffen.

Nach einer weiteren vorteilhaften Ausgestaltung kann das Holmelement entlang seiner Längsrichtung mindestens drei voneinander beabstandete Verriegelungselemente zum Fixieren des Raupenträgers an unterschiedlichen Längspositionen des Holmelements aufweisen. Damit kann der Raupenträger an mehr als zwei Positionen am Holmelement angebracht werden, so dass sich eine größere Variabilität hinsichtlich der Spurbreite ergibt.

Weiter kann vorgesehen sein, dass mehrere Holmelemente, vorzugsweise zwei oder vier Holmelemente, vorgesehen sind, die an dem Rahmenmittelteil anbaubar sind, und wobei jedes der mehreren Holmelemente mit einer Ausnehmung eines Raupenträgers zusammenwirkt.

Demnach kann nach der Erfindung auch eine Vielzahl an Holmelementen vorgesehen sein, von denen jedes an dem Rahmenmittelteil anbaubar ist. Zudem können auch mehrere Holmelemente mit einem gemeinsamen Raupenträger zusammenwirken, so dass bspw. zwei Holmelemente zu ein und demselben Raupenträger verlaufen, bzw. in dafür vorgesehene Ausnehmungen des Raupenträgers eingesteckt sind. Für jedes mit dem Raupenträger zusammenwirkende Holmelement ist dabei eine separate Ausnehmung in dem Raupenträger vorgesehen.

Eine typische Konfiguration ist dabei das Vorhandensein von vier Holmelementen, von denen jeweils zwei mit einem ersten Raupenträger und die anderen zwei mit einem zweiten Raupenträger zusammenwirken. Die Holmelemente können dabei identisch ausgebildet sein.

Zudem kann nach der Erfindung vorgesehen sein, dass das Rahmenmittelteil einen im Wesentlichen quaderförmigen Grundaufbau besitzt und an zwei seiner gegenüberliegenden Seiten dazu ausgelegt ist, je mindestens einen, vorzugsweise zwei Holmelemente anzubauen, das/die mit einem/einer jeweiligen Ausnehmung des Raupenträgers zusammenwirkt/zusammenwirken.

Nach der Erfindung kann vorgesehen sein, dass das Holmelement ein Stahlträger ist, der vorzugsweise in seiner Grundform einen rechteckigen Querschnitt aufweist.

Die Erfindung betrifft ferner eine Arbeitsmaschine, insbesondere einen Raupenkran mit einem Unterwagen nach einem der vorhergehenden Ansprüche.

Weitere Vorteile, Merkmale und Einzelheiten der Erfindung werden aufgrund der nachfolgenden Figurenbeschreibung ersichtlich. Dabei zeigen:
- Fig. 1a:: eine perspektivische Darstellung eines erfindungsgemäßen Unterwagens mit Raupenketten,
- Fig. 1b:: eine perspektivische Darstellung des Rahmenmittelteils,
- Fig. 1c:: eine perspektivische Darstellung des Raupenträgers mit einer Raupenkette,
- Fig. 2a: das Rahmenmittelteil von vorne,
- Fig. 2b: das Rahmenmittelteil in einer Seitenansicht,
- Fig. 2c: das Rahmenmittelteil in einer Draufsicht,
- Fig. 3a: eine vergrößerte perspektivische Darstellung des Raupenträgers mit einer Raupenkette,
- Fig. 3b: eine perspektivische Darstellung des Raupenträgers ohne Raupenkette,
- Fig. 3c: eine Ansicht des Raupenträgers ohne Raupenkette von schräg unten,
- Figs. 4a-h: Draufsichten und perspektivische Darstellungen zweier verschiedener Fixierungspositionen des Raupenträgers in je einem verriegelten und einem entriegelten Zustand,
- Figs. 4j-k: Schnittansichten des Holmelements zum Darlegen des entriegelten und des verriegelten Zustands mit dem Raupenträger, und
- Figs. 5a-c: verschiedene Frontalansichten während des Anbauen eines Holmelements an dem Rahmenmittelteil.

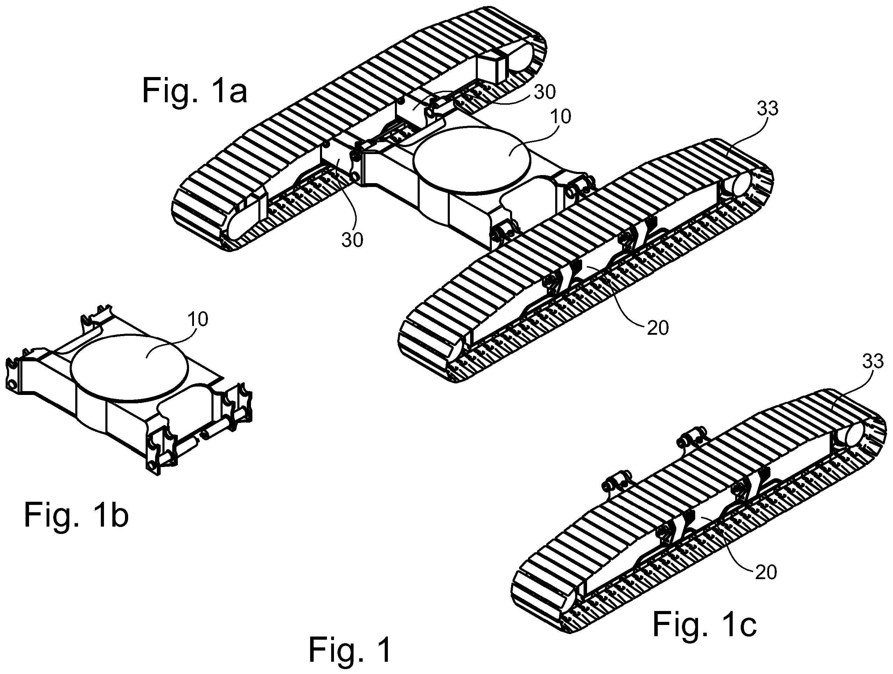

Fig. 1a zeigt den Unterwagen in einem montierten Zustand. Man erkennt, dass an dem Rahmenmittelteil 10 mehrere Holmelemente 30 angebaut sind, die mit einem linksseitigen oder einem rechtsseitigen Raupenträger 20 verbunden sind. Hierbei ist jeder der zwei Raupenträger 20 mit zwei Ausnehmungen zum jeweiligen Einführen bzw. Hindurchführen eines Holmelements 30 versehen. Zudem ist die Raupenkette 33, welche auf dem Raupenträger aufgespannt ist, dargestellt.

In der Fig. 1b kann man die vorteilhafte etwa quaderförmige Form des Rahmenmittelteils erkennen, bei der an zwei gegenüberliegenden Seitenkanten jeweils zwei Verbindungsvorrichtungen zum Anbauen eines Holmelements vorgesehen sind.

Jede der Verbindungsvorrichtungen weist eine klauenartige, etwa halbkreisförmige Fangfläche zum Aufnehmen eines Querbolzens des Holmelements aufweist und besitzt darüber hinaus eine unterhalb der Fangfläche angeordnetes Bolzenloch. Wie in der Fig. 1b weiter dargestellt, kann der Bolzen zum Eintreiben in das Bolzenloch aus einer Bolzenaufnahme stammen, der automatisch oder manuell aus dieser hervortreten kann. Besonders vorteilhaft ist, wenn der Bolzen bei einem Fluchten des holmseitigen Bolzenlochs mit dem rahmenseitigen Bolzenloch automatisch aus seiner Bolzenaufnahme herausfährt und das Holmelement an dem Rahmenmittelteil fixiert.

Fig. 1c zeigt einen Raupenträger 20 mit Raupenkette 33 in einer Perspektivansicht.

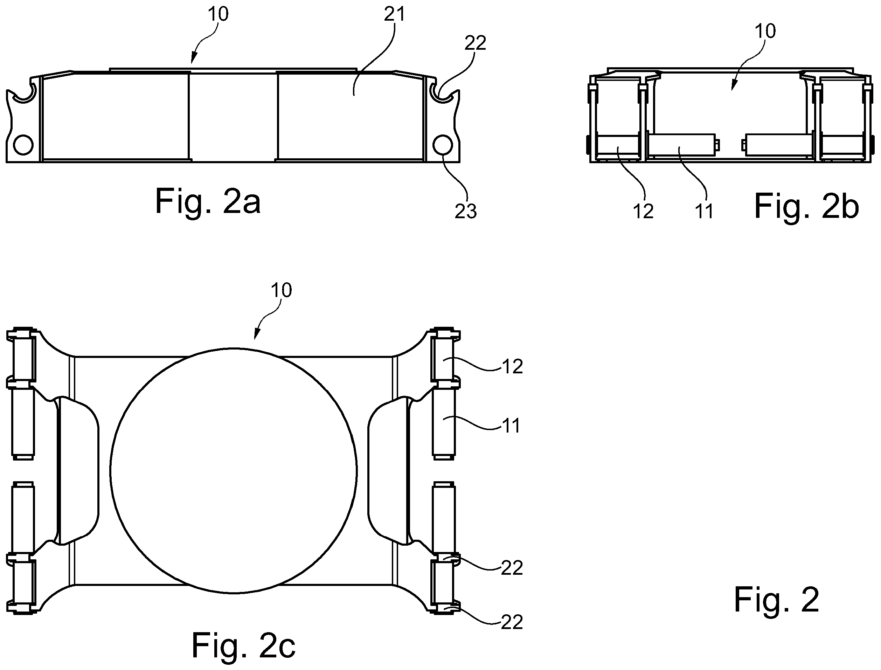

Fig. 2a ist eine Vorderansicht des Rahmenmittelteils 10, das den typischerweise in Stahlbau 21 gefertigten Körper mit den an beiden Seiten des Rahmenmittelteils 10 vorhandenen Verbindungselementen zum Anbauen eines Holmelements 30 zeigt. Man erkennt die Fangfläche 22, die als eine klauenartige, etwa halbkreisförmige Fangfläche 22 ausgebildet sein kann, um einen Querbolzen 34 des Holmelements 30 aufzunehmen. Weiter weisen die rahmenseitigen Verbindungsmittel zum Fixieren des Holmelements 30 ein Bolzenloch 23 auf.

Fig. 2b ist eine Seitenansicht des Rahmenmittelteils 10, bei der man die Bolzenaufnahme 11 und den aus dieser Bolzenaufnahme 11 herausgeschobenen Bolzen 12 erkennt. Dargestellt ist demnach der rahmenseitige Bolzen 12 in einer Verriegelungsposition, die normalerweise bei einer fluchtenden Anordnung der holmseitigen Bolzenlöcher und der rahmenseitigen Bolzenlöcher 23 eingenommen wird.

Fig. 2c ist eine Draufsicht auf das Rahmenmittelteil 10, bei der man die Fangfläche 22 zum Auflegen eines Querbolzens des Holmelements erkennt. Unterhalb dieser Fangfläche ist dabei erneut der rahmenseitige Bolzen 12 und die zugehörige Bolzenaufnahme 11 angeordnet.

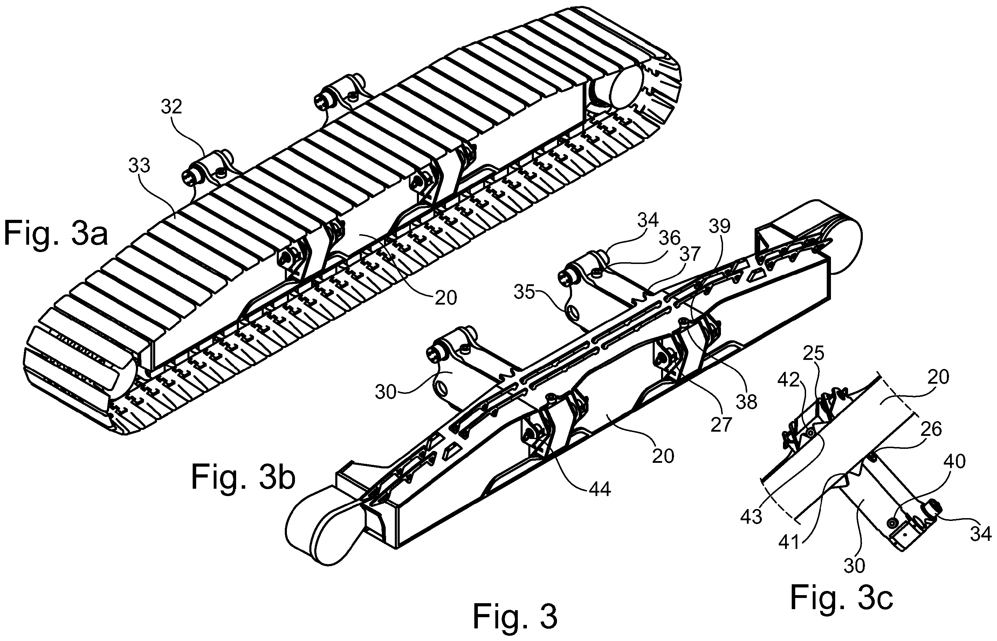

Fig. 3a zeigt den Raupenträger 20 mit der umlaufend angeordneten Raupenkette 33. Quer zu einer Längsrichtung des Raupenträgers 20 sind zwei in Längsrichtung des Raupenträgers 20 beabstandete Ausnehmungen vorhanden, in die jeweils ein Holmelement 30 eingeschoben ist. An ihrem vom Rahmenmittelteil abgewandten Längsende sind die Holmelemente mit einer Bolzenverbindung an dem Raupenträger befestigt. Das andere Längsende der Holmelemente, also das zum Rahmenmittelteil 10 gewandte Längsende besitzt dabei ein Verbindungsmittel 32 zum starren Verbinden mit dem Rahmenmittelteil 10.

Fig. 3b ermöglicht einen besseren Blick auf den Raupenträger 20 von schräg oben, da die Raupenkette 33 nun nicht mehr dargestellt ist. Die starre Verbindung von Raupenträger 20 und Holmelement 30 ist dabei durch eine Bolzenverbindung gesichert, wobei ein Bolzen 44 durch ein trägerseitiges Bolzenloch und ein holmseitiges Bolzenloch geführt ist, so dass es zu keiner Relativbewegung zwischen Holmelement 30 und Raupenträger 20 kommen kann. Um eine korrekte Ausrichtung des Holmelements in der Ausnehmung oder Durchführung 24 des Raupenträgers 20 zu erreichen, kann an dem Holmelement 30 mindestens eine nach außen abstehende Positionierungsnocke 36, 38, 40, 42 angeordnet sein, die mit einer Kontur 37, 39, 41, 43 der Ausnehmung 24 bzw. der Durchführung 24 des Raupenträgers zusammenwirkt. Wie in der Fig. 3b dargestellt, ist diese Kontur 37, 39, 41, 43 eine etwa V-förmige Vertiefung oder auch klauenartige Vertiefung in der Stirnseite der Ausnehmung 24, wobei die Vertiefung in einer Richtung verläuft, die quer zur Längsrichtung des Raupenträgers 20 angeordnet ist, somit also parallel zur Einschubrichtung des Holmelements 30 in die Ausnehmung 24 ist. Man erkennt bei beiden Holmelementen 30, dass die vom Rahmenmittelteil 10 entfernte und oben angeordnete Positionierungsnocke 38 in Längsrichtung des Holmelements 30 von einer zum Rahmenmittelteil 10 hin versetzten, ebenfalls oben angeordneten Positionierungsnocke 36 versetzt ist. Kommt eine Positionierungsnocke 36, 38, 40, 42 in Eingriff mit der zugehörigen auf der Stirnseite der Ausnehmung 24 angeordneten Kontur 37, 39, 41, 43, wird eine weitere Relativbewegung von Holmelement 30 und Raupenträger 20 unterbunden, da die Positionierungsnocke 36, 38, 40, 42 und die Kontur 37, 39, 41, 43 als Anschlag dienen. Ist eine Anschlagposition erreicht, fluchten dabei auch die trägerseitig vorhandenen Bolzenlöcher 27 mit den jeweils zugehörigen holmseitigen Bolzenlöchern 25, 26, so dass auch einfache Art und Weise eine automatische oder manuelle Verbolzung stattfinden kann.

Fig. 3c zeigt anders als Fig. 3b eine Unterseite der Anordnung aus Raupenträger 20 und Holmelement 30. Auch auf der Unterseite des Holmelements sind in der Längsrichtung beabstandete Positionierungsnocken 40, 42 angeordnet, die dazu ausgelegt sind, mit unterschiedlichen Stirnseiten der Ausnehmung bzw. Durchführung 24 des Raupenträgers 20 zusammenzuwirken. Genau wie die auf der Oberseite des Holmelements 30 angeordneten Positionierungsnocken 36, 38 wird bei einem Eingriff mit der etwa V-förmig oder auch klauenartig geformten Vertiefung 41, 43 in der Stirnseite der Durchführung 24 eine Position von Raupenträger und Holmelement 30 festgelegt, in der die ein Paar der trägerseitig vorhandenen Bolzenlöcher 27 mit den jeweils zugehörigen holmseitigen Bolzenlöchern 25, 26 fluchtet. Auch hier bewirkt das Zusammenwirken der Kontur 41, 43 mit der Positionierungsnocke 40, 42 ein optimales Ausrichten des Holmelements 30 in Bezug auf den Raupenträger bzw. die Durchführung 24.

Weiter sind die Positionierungsnocken 36, 38, 40, 42 dazu geeignet, ein vollständiges Lösen des Holmelements 30 von dem Raupenträger 20 zu verhindern. Ein Durchrutschen oder ein Hinausgleiten des Holmelements 30 kann bei vorhandenen Positionierungsnocken 36, 38, 40, 42 nicht passieren, da ein Paar an Positionierungsnocken zuvor in Eingriff mit der zugehörigen an der Stirnseite der Durchführung 24 angeordneten Kontur kommt. Dem Fachmann ist klar, dass es nicht unbedingt eine spezifisch ausgeformte Kontur an den Stirnseiten der Ausnehmung bedarf, um eine Positionierung von Holmelement 30 und Raupenträger 20 zu bewirken. Es ist lediglich erforderlich, dass mindestens einer der Positionierungsnocken mit der Stirnseite der Durchführung 24 in Berührung kommt.

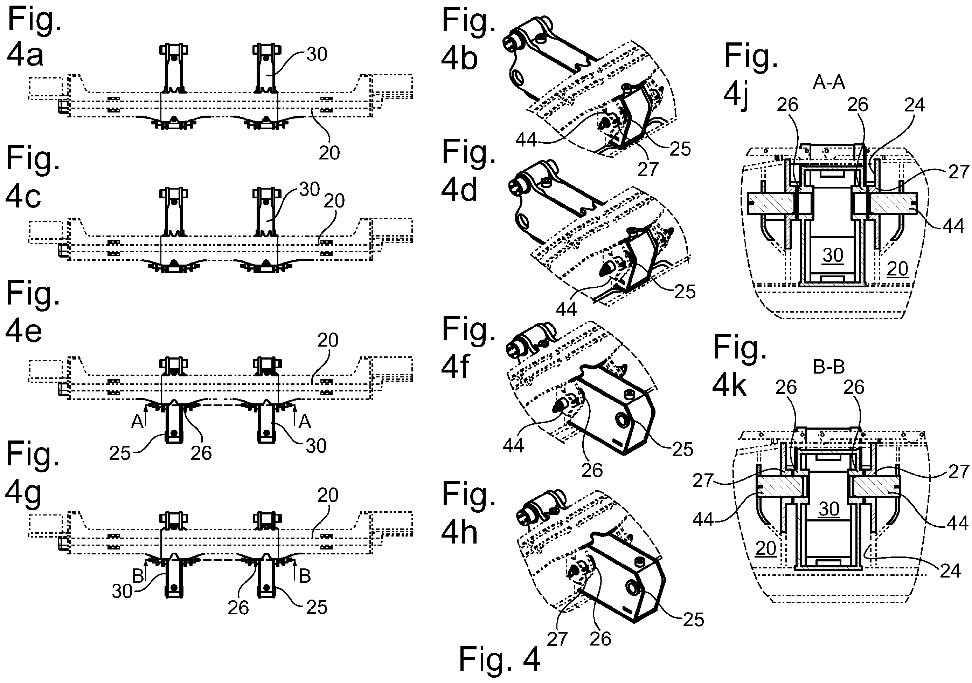

Die Figuren 4a-h zeigen Draufsichten und perspektivische Darstellungen zweier verschiedener Fixierungspositionen des Raupenträgers 20 in je einem verriegelten und einem entriegelten Zustand.

Fig. 4a zeigt in einer Draufsicht den gestrichelt dargestellten Raupenträger 20 und die dazu quer ausgerichteten und durch die (nicht erkennbare) Durchführung 24 geschobenen Holmelemente 30. Baut man die Holmelemente 30 nun in einer solchen Konfiguration an das Rahmenmittelteil an, wäre die Spur des Unterwagens verbreitert.

Fig. 4b zeigt eine Perspektivansicht aus Fig. 4a, bei der man erkennt, dass der Bolzen 44 in seinem eingeschobenen Zustand ist, also Raupenträger 20 und Holmelement 30 miteinander verbindet.

Die Figs. 4c und 4d entsprechen im Wesentlichen den Figs. 4a und 4b, wobei sich jedoch nun der Bolzen 44 nicht mehr in einer verriegelnden Position sondern in einer entriegelten Position befindet. Der Bolzen ist gegenüber seiner vorherigen Stellung nun aus dem holmseitigen Bolzenloch 25 herausgezogen. Ein Verschieben des Holmelements 30 in der Durchführung 24 des Raupenträgers 20 ist nun möglich.

Figs. 4e und 4h zeigen nun eine Draufsicht bzw. eine perspektivische Darstellung, bei der die beiden Holmelemente 30 aus ihrer in den Figs. 4a-4d eingenommenen Positionen jeweils weiter durch die Durchführung des Raupenträgers eingeschoben worden sind. Dieser Zustand entspricht einer verringerten Spurbreite des Unterwagens, da sich bei einem Anbauen der so in dem Raupenträger angeordneten Holmelemente 30 der Raupenträger näher an dem Rahmenmittelteil befindet.

Die Figs. 4e und 4f zeigen dabei die Bolzverbindung in einem geöffneten Zustand, wohingegen die Figs. 4g und 4h eingeschobene Bolzen 44 zeigen, die auch mit einem jeweiligen Holmelement 30 zusammenwirken.

Der Raupenträger kann also an zwei unterschiedlichen Längspositionen eines jeweiligen Holmelements 30 angeordnet werden, was durch das Vorsehen von mehreren holmseitigen und in Längsrichtung des Holms beabstandeten Bolzlöchern 25, 26 bzw. Bolzlöcherpaaren verwirklicht sein kann.

Figs. 4j und 4k zeigen eine Schnittansicht in der Bolzverbindung aus den Figs. 4e bzw. 4g, also in einem entriegelten (Fig. 4j) und einem verriegelten (Fig. 4k) Zustand. In einem entriegelten Zustand greift der Bolzen 44 nicht in ein holmseitiges Bolzenloch 26 ein. Anders stellt sich dies in dem verriegelten Zustand dar, bei dem der Bolzen 44 in das zugehörige Bolzenloch 26 des Holmelements 30 eingreift. Weiter ist ersichtlich, dass an gegenüberliegenden Seiten jeweils ein Bolzen 44 vorgesehen werden kann, wobei dies natürlich nicht zwangsläufig der Fall sein muss. Für das Grundprinzip der Erfindung wäre auch ein Bolzen 44 ausreichend.

Insgesamt erkennt man, dass der Raupenträger auf einfache Art und Weise in seinem Abstand gegenüber dem Rahmenmittelteil angeordnet werden kann.

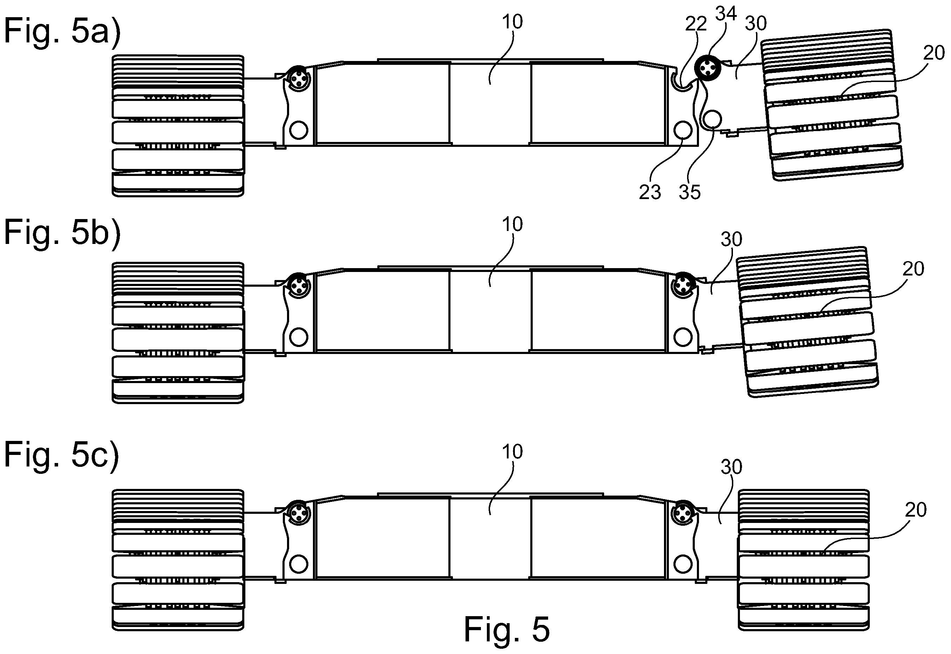

Figs 5a- 5c zeigen einen Anbauvorgang des am Raupenträger fixierten Holmelements 30 an dem Rahmenmittelteil 10. Mittels eines Hilfshebezeugs, wie ein Kran oder dergleichen, wird der Raupenträger 20 über die holmseitigen Querbolzen 34 in die nach oben geöffneten hakenförmigen Aufnahmen 22 (die auch als Fangfläche bezeichnet werden können) eingehängt. Dadurch sitzt der mit dem Holmelement 30 verbundene Raupenträger 20 auf dem Rahmenmittelteil 10 auf und es wird eine erste (horizontale) Verbindungsachse gebildet, um die nach der ersten Vorpositionierung der Raupenträger 20 zum Erreichen der finalen Montageposition herangeschwenkt wird.

Wie in Fig. 5a gezeigt, kann zur leichteren Montage der Raupenträger 20 in Richtung des Rahmenmittelteils geneigt sein (vgl. Fig. 5a). Anschließend erfolgt ein schwerkraftvermitteltes Heranschwenken des Raupenträgers 20 an den Rahmenmittelteil 10 um die durch Querbolzen 34 und Fangfläche 22 erzeugte erste Verbindungsachse.

Bei Erreichen der Montageposition, also einer fluchtenden Ausrichtung des holmseitigen Bolzenlochs 35 und des rahmenseitigen Bolzenlochs 23 findet eine automatische oder manuelle Verbolzung über den Bolzen 11 (vgl. Fig. 2b) statt, so dass eine zweite (ebenfalls horizontale) Verbindungsachse hergestellt und der Raupenträger 20 nun endgültig an dem Rahmenmittelteil 10 befestigt ist. Dabei kann vorgesehen sein, dass der Raupenträger 20 gleichzeitig vollautomatisch an die Energieversorgung der Arbeitsmaschine 1 angeschlossen und sofort betriebsbereit ist.

In allen Ausführungsbeispielen können die beschriebenen Verbindungselemente von Holmelement, Rahmenmittelteil und Raupenträger auch an dem jeweils anderen Verbindungspartner angeordnet sein, wobei sich die zuvor beschriebene Montage oder die oben dargelegten Eigenschaften und Vorteile nicht ändern würden.

So kann bspw. vorgesehen sein, dass Rangfläche 22 nicht am Rahmenmittelteil 10 sondern am Holmelement 30 angeordnet ist und am Rahmenmittelteil 10 stattdessen ein Querbolzen vorgesehen ist.

## Patentansprüche

1. Unterwagen für eine Arbeitsmaschine, insbesondere einen Raupenkran, umfassend:
ein Rahmenmittelteil (10) zum Aufnehmen eines Oberwagens der Arbeitsmaschine,
ein längliches Holmelement (30), das an dem Rahmenmittelteil (10) anbaubar ist, und
einen Raupenträger (20) zum Tragen einer Raupenkette (33), wobei der Raupenträger (20) eine Ausnehmung (24) zum Durchführen des Holmelements (30) aufweist, und
das Holmelement (30) entlang seiner Längsrichtung mehrere voneinander beabstandete Verriegelungselemente (25, 26) zum Fixieren des Raupenträgers (20) an unterschiedlichen Längspositionen des Holmelements (30) aufweist,
**dadurch gekennzeichnet, dass**
das Holmelement (30) zum Ausrichten des Raupenträgers (20) an einer bevorzugten Fixierungsposition mindestens eine vom Holmelement (30) nach außen abstehende Positionierungsnocke (36, 38, 40 42) umfasst.

2. Unterwagen nach Anspruch 1, wobei die mehreren voneinander beabstandeten Verriegelungselemente (25, 26) Bolzenlöcher zur Aufnahme eines Bolzens (44) sind.

3. Unterwagen nach einem der vorhergehenden Ansprüche, wobei der Raupenträger (20) ein Verriegelungselement (27) zum Fixieren des in den Raupenträger (20) eingeführten oder durch ihn hindurchgeführten Holmelements (30) aufweist, wobei vorzugsweise das Verriegelungselement (27) ein Bolzenloch zur Aufnahme eines Bolzens (44) ist.

4. Unterwagen nach einem der vorhergehenden Ansprüche, wobei der Raupenträger (20) an dem Holmelement (30) mittels einer Bolzverbindung fixiert ist, vorzugsweise durch die fluchtende Ausrichtung einander korrespondierender Bolzlöcher (26, 27) an dem Holmelement (30) und dem Raupenträger (20) und dem Einstecken eines Bolzens (44) in die einander fluchtenden Bolzlöcher.

5. Unterwagen nach einem der vorhergehenden Ansprüche, wobei die Positionierungsnocke (36, 38, 40 42) senkrecht zur Längsrichtung des Holmelements (30) absteht.

6. Unterwagen nach einem der vorhergehenden Ansprüche, wobei der Raupenträger (20) zum Ausrichten des Raupenträgers (20) an einer bevorzugten Fixierungsposition des Holmelements (30) im Umfangsbereich der Ausnehmung (24) zum Durchführen oder Einführen des Holmelements (30) eine sich parallel zur Ein- oder Durchführungsrichtung des Holmelements (30) erstreckende klauenartige Vertiefung (37, 39, 41, 43) zum Aufnehmen einer vom Holmelement (30) abstehenden Positionierungsnocke (36, 38, 40 42) umfasst, wobei vorzugsweise an beiden Seiten der Ausnehmung (24) im Umfangsbereich mindestens eine klauenartige Vertiefung (37, 39, 41, 43) vorgesehen ist.

7. Unterwagen nach einem der vorhergehenden Ansprüche, wobei das Rahmenmittelteil (10) zum Anbauen des Holmelements (30) eine klauenartige, etwa halbkreisförmige Fangfläche (22) zum Aufnehmen eines Querbolzens (34) des Holmelements (30) aufweist und vorzugsweise ein zugehöriges Bolzenloch (35) aufweist, um eine starre Verbindung von Holmelement (30) und Rahmenmittelteil (10) über eine Bolzenverbindung mit einem fluchtenden holmseitigen Bolzenloch (23) zu erzeugen.

8. Unterwagen nach Anspruch 7, wobei eine starre Verbindung von Holmelement (30) und Rahmenmittelteil (10) nach Einlegen des Querbolzens (34) in die Fangfläche (22) und einer entsprechenden Schwenkbewegung des in die Fangfläche (22) gelegten Holmelements (30) erfolgt, die zum fluchtenden Ausrichten der holmseitig und rahmenseitig vorhandenen Bolzenlöcher (23, 35) dient.

9. Unterwagen nach einem der vorhergehenden Ansprüche, wobei das Holmelement (30) in die Durchführung des Raupenträgers (20) eingeschoben ist und der Abstand des Raupenträgers (20) zum Rahmenmittelteil (10), also die Spurweite der Arbeitsmaschine, aufgrund der mehreren in Längsrichtung voneinander beabstandeten Verriegelungselemente (25, 26) des Holmelements (30) variierbar, insbesondere stufenartig variierbar ist.

10. Unterwagen nach einem der vorhergehenden Ansprüche, wobei das Holmelement (30) derart in den Raupenträger (20) eingeschoben ist, dass ein Herausgleiten des Holmelements (30) auch bei nicht gesteckten Bolzen (44) nicht möglich ist.

11. Unterwagen nach einem der vorhergehenden Ansprüche, wobei das Holmelement (30) entlang seiner Längsrichtung mindestens drei voneinander beabstandete Verriegelungselemente (25, 26) zum Fixieren des Raupenträgers (20) an unterschiedlichen Längspositionen des Holmelements (30) aufweist.

12. Unterwagen nach einem der vorhergehenden Ansprüche, wobei mehrere Holmelemente, vorzugsweise zwei oder vier Holmelemente, vorgesehen sind, die an dem Rahmenmittelteil anbaubar sind, und wobei jedes der mehreren Holmelemente mit einer Ausnehmung eines Raupenträgers zusammenwirkt.

13. Unterwagen nach einem der vorhergehenden Ansprüche, wobei das Rahmenmittelteil (10) einen im Wesentlichen quaderförmigen Grundaufbau besitzt und an zwei seiner gegenüberliegenden Seiten dazu ausgelegt ist, je mindestens einen, vorzugsweise zwei Holmelemente (30) anzubauen, das/die mit einem/einer jeweiligen Ausnehmung (24) des Raupenträgers (20) zusammenwirkt/zusammenwirken.

14. Arbeitsmaschine, insbesondere Raupenkran mit einem Unterwagen nach einem der vorhergehenden Ansprüche.

## Claims

1. An undercarriage for a work machine, in particular a crawler crane, comprising:
a center frame part (10) for receiving a superstructure of the work machine;
an elongate strut element (30) that is attachable to the center frame part (10);
and
a crawler carrier (20) for carrying a crawler chain (33), wherein
the crawler carrier (20) has a cutout (24) for leading through the strut element (30); and
the strut element (30) has a plurality of mutually spaced apart latching elements (25, 26) along its longitudinal direction to fix the crawler carrier (20) at different longitudinal positions of the strut element (30),
**characterized in that**
the strut element (30) has at least one positioning cam (36, 38, 40, 42) that projects outwardly from the strut element (30) to align the crawler carrier (20) at a preferred fixing position.

2. An undercarriage in accordance with claim 1, wherein the plurality of mutually spaced apart latching elements (25, 26) are pin holes to receive a pin (44).

3. An undercarriage in accordance with one of the preceding claims, wherein the crawler carrier (20) has a latching element (27) to fix the strut element (30) introduced into the crawler carrier (30) or led through it, with the latching element (27) preferably being a pin hole to receive a pin (44).

4. An undercarriage in accordance with one of the preceding claims, wherein the crawler carrier (20) is fixed to the strut element (30) by means of a pin connection, preferably by the aligned orientation of pin holes (26, 27) that correspond to one another at the strut element (30) and at the crawler carrier (20) and the inserting of a pin (44) into the mutually aligned pin holes.

5. An undercarriage in accordance with one of the preceding claims, wherein the positioning cam (36, 38, 40, 42) preferably projects perpendicular to the longitudinal direction of the strut element (30).

6. An undercarriage in accordance with one of the preceding claims, wherein the crawler carrier (20) comprises a claw-like recess (37, 39, 41, 43), that extends in parallel with the direction of introduction or leading through of the strut element (30), for receiving a positioning cam (36, 38, 40, 42) projecting from the strut element (30) to align the crawler carrier (20) at a preferred fixing position of the strut element (30) in the peripheral region of the cutout (24) for leading through or introducing the strut element (30), with at least one claw-like recess (37, 39, 41, 43) preferably being provided at both sides of the cutout (24) in the peripheral region.

7. An undercarriage in accordance with one of the preceding claims, wherein the center frame part (10) has a claw-like, approximately semicircular, capturing surface (22) for receiving a transverse pin (34) of the strut element (30) for the attachment of the strut element (30) and preferably has an associated pin hole (35) to produce a rigid connection of the strut element (30) and the center frame part (10) to an aligned pin hole (23) at the strut side via a pin connection.

8. An undercarriage in accordance with claim 7, wherein a rigid connection of the strut element (30) and the center frame part (10) takes place after placing the transverse pin (34) into the capturing surface (22) and after a corresponding pivot movement of the strut element (30) placed into the capturing surface (22) that serves the aligned orientation of the pin holes (23, 35) present at the strut side and the frame side.

9. An undercarriage in accordance with one of the preceding claims, wherein the strut element (30) is pushed into the leadthrough of the crawler carrier (20) and the spacing of the crawler carrier (20) from the center frame part, (10,) that is the track width of the work machine, is variable, in particular variable by steps, due to the plurality of latching elements (25, 26) of the strut element (30) spaced apart from one another in the longitudinal direction.

10. An undercarriage in accordance with one of the preceding claims, wherein the strut element (30) is pushed into the crawler carrier (20) such that a sliding out of the strut element (30) is also not possible with an inserted pin (44).

11. An undercarriage in accordance with one of the preceding claims, wherein the strut element (40) has at least three mutually spaced apart latching elements (25, 26) along its longitudinal direction to fix the crawler carrier (20) at different longitudinal positions of the strut element (30).

12. An undercarriage in accordance with one of the preceding claims, wherein a plurality of strut elements, preferably two or four strut elements, are provided that can be attached to the center front part, and wherein each of the plurality of strut elements cooperates with a cutout of a crawler carrier.

13. An undercarriage in accordance with one of the preceding claims, wherein the center frame part (10) has a substantially parallelepiped-shaped basic design and is configured at two of its oppositely disposed sides to attach at least one, preferably two, strut elements (30) in each case that cooperates/cooperate with one/a respective cutout (24) of the crawler carrier (20).

14. A work machine, in particular a crawler crane, having an undercarriage in accordance with one of the preceding claims.

## Revendications

1. Châssis de roulement pour un engin de chantier, en particulier une grue sur chenilles, comprenant :
une partie centrale de cadre (10) destinée à recevoir une tourelle de l'engin de chantier,
un élément traverse (30) allongé qui peut être monté sur la partie centrale de cadre (10), et
un support de chenille (20) destiné à supporter une chenille (33), dans lequel
le support de chenille (20) comporte un évidement (24) destiné à faire passer l'élément traverse (30), et
l'élément traverse (30) comporte, le long de sa direction longitudinale, plusieurs éléments de verrouillage (25, 26) espacés les uns des autres pour fixer le support de chenille (20) en différentes positions longitudinales sur l'élément traverse (30),
**caractérisé en ce que**
l'élément traverse (30) comprend, pour aligner le support de chenille (20) sur une position de fixation préférée, au moins une came de positionnement (36, 38, 40, 42) dépassant de l'élément traverse (30) vers l'extérieur.

2. Châssis de roulement selon la revendication 1, dans lequel les plusieurs éléments de verrouillage (25, 26) espacés les uns des autres sont des trous de boulon destinés à recevoir un boulon (44).

3. Châssis de roulement selon l'une des revendications précédentes, dans lequel le support de chenille (20) comporte un élément de verrouillage (27) destiné à fixer l'élément traverse (30) inséré dans le support de chenille (20) ou traversant celui-ci, l'élément de verrouillage (27) étant de préférence un trou de boulon destiné à recevoir un boulon (44).

4. Châssis de roulement selon l'une des revendications précédentes, dans lequel le support de chenille (20) est fixé à l'élément traverse (30) au moyen d'une liaison par boulon, de préférence par l'orientation alignée de trous de boulon (26, 27) correspondants les uns aux autres sur l'élément traverse (30) et le support de chenille (20) et l'introduction d'un boulon (44) dans les trous de boulon alignés les uns avec les autres.

5. Châssis de roulement selon l'une des revendications précédentes, dans lequel la came de positionnement (36, 38, 40, 42) dépasse perpendiculairement à la direction longitudinale de l'élément traverse (30).

6. Châssis de roulement selon l'une des revendications précédentes, dans lequel, pour l'alignement du support de chenille (20) sur une position de fixation préférée de l'élément traverse (30), le support de chenille (20) comprend, dans la zone du pourtour de l'évidement (24) destiné au passage ou à l'insertion de l'élément traverse (30), un creux (37, 39, 41, 43) de type griffe s'étendant parallèlement à la direction d'insertion ou de passage de l'élément traverse (30) pour recevoir une came de positionnement (36, 38, 40, 42) dépassant de l'élément traverse (30), au moins un creux (37, 39, 41, 43) de type griffe étant de préférence prévu des deux côtés de l'évidement (24) dans la zone du pourtour.

7. Châssis de roulement selon l'une des revendications précédentes, dans lequel, pour le montage de l'élément traverse (30), la partie centrale de cadre (10) comporte une surface réceptrice (22) approximativement demi-circulaire de type griffe pour recevoir un boulon transversal (34) de l'élément traverse (30) et comporte de préférence un trou de boulon (35) associé pour donner lieu à une liaison rigide de l'élément traverse (30) et de la partie centrale de cadre (10) par le biais d'une liaison par boulon avec un trou de boulon (23) côté traverse aligné.

8. Châssis de roulement selon la revendication 7, dans lequel une liaison rigide de l'élément traverse (30) et de la partie centrale de cadre (10) s'effectue après le placement du boulon transversal (34) dans la surface réceptrice (22) et un mouvement de pivotement correspondant de l'élément traverse (30) placé dans la surface réceptrice (22), ledit mouvement servant à orienter de manière alignée les trous de boulon (23, 35) présents côté traverse et côté cadre.

9. Châssis de roulement selon l'une des revendications précédentes, dans lequel l'élément traverse (30) est inséré dans le passage du support de chenille (20) et l'espace entre le support de chenille (20) et la partie centrale de cadre (10), c'est-à-dire la largeur de voie de l'engin de chantier, est variable, en particulier variable par paliers, en raison des plusieurs éléments de verrouillage (25, 26), espacés les uns des autres dans la direction longitudinale, de l'élément traverse (30).

10. Châssis de roulement selon l'une des revendications précédentes, dans lequel l'élément traverse (30) est inséré dans le support de chenille (20) de telle manière qu'une sortie par glissement de l'élément traverse (30) est impossible même lorsque le boulon (44) n'est pas introduit.

11. Châssis de roulement selon l'une des revendications précédentes, dans lequel l'élément traverse (30) comporte, le long de sa direction longitudinale, au moins trois éléments de verrouillage (25, 26) espacés les uns des autres pour fixer le support de chenille (20) en différentes positions longitudinales sur l'élément traverse (30).

12. Châssis de roulement selon l'une des revendications précédentes, dans lequel plusieurs éléments traverse, de préférence deux ou quatre éléments traverse, sont prévus, lesquels peuvent être montés sur la partie centrale de cadre et dans lequel chacun des plusieurs éléments traverse coopère avec un évidement du support de chenille.

13. Châssis de roulement selon l'une des revendications précédentes, dans lequel la partie centrale de cadre (10) possède une structure de base sensiblement en forme de parallélépipède et est conçue, sur deux de ses côtés opposés, de façon à monter respectivement au moins un, de préférence deux éléments traverse (30), qui coopère/coopèrent avec un évidement (24) / un évidement (24) respectif du support de chenille (20).

14. Engin de chantier, en particulier grue sur chenilles, comportant un châssis de roulement selon l'une des revendications précédentes.
